# EUROPEAN PATENT APPLICATION

(11) **EP 3 808 189 A1**
(43) Date of publication of application: **21.04.2021**
(21) Application number: 19203181.3
(22) Date of filing: 15.10.2019
(51) Int. Cl.: A23L 2/395, A23L 3/36, A23L 29/212

(54) **APPARATUS FOR MAKING INDIVIDUALLY FROZEN INSTANT TAPIOCA PEARLS**

(71) Applicant: Fong Chen Frozen Food Co., Ltd., 90543 Ligang Township, Pingtung County (TW)
(72) Inventor: Chen, Shih-Ting, 90543 Ligang Township, Pingtung County (TW); Chiang, Chin-Hua, 90541 Ligang Township, Pingtung County (TW)
(74) Representative: V.O.

(57) **Abstract**

An apparatus for making individually frozen instant tapioca pearls (83) includes a forming unit (2) for cooking a plurality of raw tapioca pearls (81), a conveying unit (3) for conveying the cooked tapioca pearls (82) from the forming unit (2) to a quick freezing unit (4) which blows cold air toward the cooked tapioca pearls (82) to obtain individually frozen instant cooked tapioca pearls (83), an agitating unit (5) for agitating the individually frozen instant cooked tapioca pearls (83), a separation unit (6) for separating standard sizes of the individually frozen instant cooked tapioca pearls (83) from rejected ones, and a holding unit (7) for holding the standard sized individually frozen instant tapioca pearls (83).

## Description

The disclosure relates to an apparatus, more particularly to an apparatus for making individually frozen instant tapioca pearls.

Tapioca pearls or balls are often used in desserts and beverages, and by virtue of their chewiness and varied tastes and appearances, they have captured the hearts of many consumers. Generally, the tapioca pearls are made by first mixing the tapioca flour with water, followed by kneading, sifting and drying to form raw tapioca pearls. The raw tapioca pearls are cooked to make it completely soft, and are then washed and drained, followed by mixing with an appropriate amount of sugar to obtain the cooked tapioca pearls. The above mentioned process is mostly done manually, so that it is cumbersome and time consuming. Further, the obtained tapioca pearls have a sell-by date and thus cannot be placed at room temperature for a long time. If they are placed in the refrigerator, they will become hard, and if they are cooked again, although they become soft, their chewiness cannot be restored, thereby losing its main attraction. Under the fact that the tapioca pearls are not easy to store and have a short sell-by date, consumers can only go directly to the store and buy the tapioca pearls when they want to eat. However, the business hour of the store has to be considered, so that the tapioca pearls are not available anytime, anywhere.

Therefore, an object of the present disclosure is to provide an apparatus for making individually frozen instant tapioca pearls that can alleviate at least one of the drawbacks of the prior art.

Accordingly, an apparatus for making individually frozen instant tapioca pearls of this disclosure includes a forming unit, a conveying unit, a quick freezing unit, an agitating unit, a separation unit and a holding unit. The forming unit includes a boiling device for cooking a plurality of raw tapioca pearls in boiling water for 5 to 20 minutes to obtain cooked tapioca pearls, a washing device for washing the cooked tapioca pearls from the boiling device with flowing water to remove mucus on surfaces of the cooked tapioca pearls, an immersing device for immersing the cooked tapioca pearls that have undergone washing in the washing device in water for 30 to 45 minutes, and a cooling device for cooling the cooked tapioca pearls that have undergone immersing in the immersing device for 60 to 180 minutes.

The conveying unit includes a sanitary tube for passage of the cooked tapioca pearls that have undergone cooling in the cooling device therethrough, a washing and draining device for washing and draining the cooked tapioca pearls from the sanitary tube, and a vibrating screen for separating the cooked tapioca pearls that have undergone washing and draining in the washing and draining device through vibration. The quick freezing unit is disposed downstream of the conveying unit and includes a box body for receiving the cooked tapioca pearls from the vibrating screen, and at least one quick freezing fan connected to the box body. The at least one quick freezing fan has a wind speed ranging from 3 to 5 meters per second, an air pressure ranging from 500 Pa to 1000 Pa, and an output air temperature ranging from -5°C to -40°C. The at least one quick freezing fan is operable to blow cold air toward the cooked tapioca pearls so as to quickly freeze the cooked tapioca pearls and obtain individually frozen instant cooked tapioca pearls.

The agitating unit is disposed on a rear side of the quick freezing unit for agitating the individually frozen instant cooked tapioca pearls so that the individually frozen instant cooked tapioca pearls will not stick to one another.

The separation unit includes a separation mechanism and a sorting mechanism. The separation mechanism is disposed downstream of the agitating unit and includes a conveyor belt for conveying the individually frozen instant tapioca pearls from the agitating unit, a plurality of rollers rollaby disposed above the conveyor belt, and a continuous belt that surrounds the rollers, that is driven to move by the rollers and that is spaced apart from the conveyor belt to form a passage therebetween. The passage has a height that just allows a single individually frozen instant tapioca pearl to enter and pass therethrough. The sorting mechanism is disposed downstream of the separation mechanism, and includes a first mesh belt having a surface formed with a plurality of first mesh holes, and a second mesh belt disposed downstream of the first mesh belt and having a surface formed with a plurality of second mesh holes. Each second mesh hole has a hole diameter larger than that of each first mesh hole. The first mesh belt is configured to allow each individually frozen instant tapioca pearl having a diameter smaller than the hole diameter of each first mesh hole to fall therethrough and be rejected. The second mesh belt is configured to allow each individually frozen instant tapioca pearl having a diameter smaller than the hole diameter of each second mesh hole to fall therethrough, and is configured to reject each individually frozen instant tapioca pearl having a diameter larger than the hole diameter of each second mesh hole. The holding unit is used for holding the individually frozen instant tapioca pearls falling from the second mesh belt.

Other features and advantages of the disclosure will become apparent in the following detailed description of the embodiment with reference to the accompanying drawings, of which:
FIG. 1 is a block diagram of an apparatus for making individually frozen instant tapioca pearls according to the embodiment of the present disclosure;
FIG. 2 is a schematic view of a pretreatment unit of the embodiment;
FIG. 3 is a schematic view of a forming unit of the embodiment;
FIG. 4 is a side view of a conveying unit of the embodiment;
FIG. 5 is a top view of FIG. 4;
FIG. 6 is a side view of a quick freezing unit of the embodiment;
FIG. 7 is a top view of FIG. 6;
FIG. 8 is a side view of a separation unit of the embodiment;
FIG. 9 is a fragmentary top view of FIG. 8;
FIG. 10 is a schematic view of a holding unit of the embodiment;
FIG. 11 illustrates how a pack of individually frozen instant tapioca pearls made from this embodiment can be used instantly;
FIG. 12 illustrates how a raw tapioca pearl can be shaped using a mold; and
FIG. 13 illustrates the different shapes of tapioca pearls.

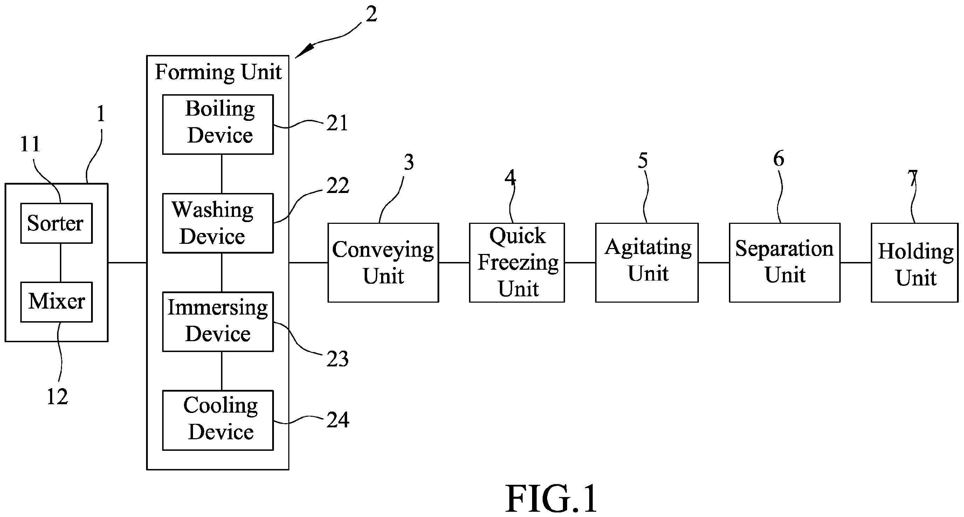

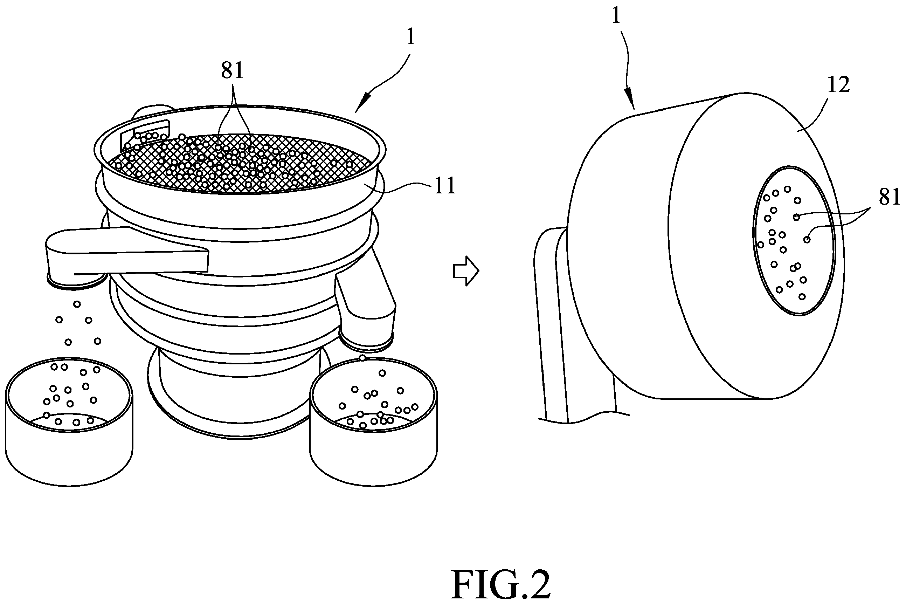

Referring to FIGS. 1 and 2, an apparatus for making individually frozen instant tapioca pearls 83 according to the embodiment of the present disclosure is shown to comprise a pretreatment unit 1, a forming unit 2, a conveying unit 3, a quick freezing unit 4, an agitating unit 5, a separation unit 6, and a holding unit 7. The pretreatment unit 1 includes a plurality of sorters 11 and a plurality of mixers 12 (only one is shown in FIG. 2). Each sorter 11 sorts a plurality of raw tapioca pearls 81 of different sizes through a vibrating screen. After screening, the qualified raw tapioca pearls 81 are entered into the mixers 12 for performing a preliminary mixing treatment of the raw tapioca pearls 81 by generating a centrifugal force through a vertical rotation.

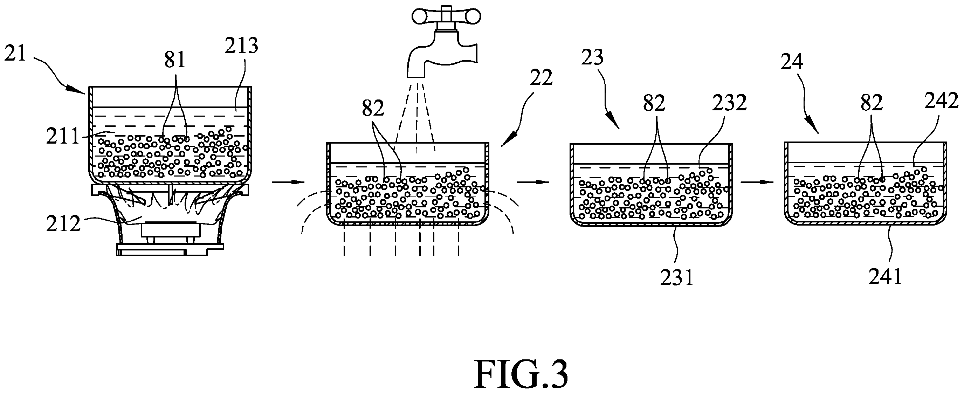

Referring to FIG. 3, in combination with FIG. 1, the forming unit 2 includes a boiling device 21, a washing device 22, an immersing device 23, and a cooling device 24. The boiling device 21 includes a cooking pot 211 for containing water and the raw tapioca pearls 81, and a heat source 212 for heating the cooking pot 211. The raw tapioca pearls 81 are cooked in boiling water 213 for 5 to 20 minutes to obtain cooked tapioca pearls 82. Although the tapioca pearls 82 are already cooked, they are not completely soft. The raw tapioca pearls 81 are made by mixing starch, water and food coloring into granular shapes or other shapes using molds. The ratio of starch to water is 2:1. The starch is selected from the group consisting of tapioca flour, potato flour, sweet potato flour, cornstarch, and combinations thereof. The food coloring is selected from the group consisting of caramel coloring, monascus coloring, gardenia coloring, and combinations thereof. It should be noted herein that the listed food colorings have different colors, and the combination of any two of them can result in a different color change. For example, the raw tapioca pearls 81 will have caramel colors by adding the caramel coloring, red colors by adding the monascus coloring, yellow colors by adding the gardenia coloring, green colors by adding the monascus and gardenia colorings, and reddish brown colors by adding the monascus and caramel colorings.

The washing device 22 is used for washing the cooked tapioca pearls 82 from the boiling device 21 with flowing water to remove mucus on the surfaces of the cooked tapioca pearls 82. In this embodiment, the water for washing the cooked tapioca pearls 82 has a temperature of about -4°C, so that the chewiness of the cooked tapioca pearls 82 can be increased. The immersing device 23 has an immersing container 231 containing water 232 with a temperature of 85°C to 95°C. The immersing device 23 may further have a cover body (not shown) for covering the immersing container 231 and for sanitary issue. The cooked tapioca pearls 82 that have undergone washing in the washing device 22 are disposed in the immersing container 231, and are immersed in the water 232 for 30 to 45 minutes. The immersing container 231 can further contain sugar which is dissolved in the water 232. The sugar may be honey or fructose. Through this, the cooked tapioca pearls 82 can absorb sugar during immersion.

The cooling device 24 has a cooling container 241 containing water 242 with a low temperature of 0°C to 10°C. Similarly, the cooling device 24 may further have a cover body (not shown) for covering the cooling container 241 and for sanitary issue. The cooked tapioca pearls 82 that have undergone immersing in the immersing container 231 are disposed in the cooling container 241, and are cooled for 60 to 180 minutes, so that the chewiness of the cooked tapioca pearls 82 can be increased and their stickiness can be reduced.

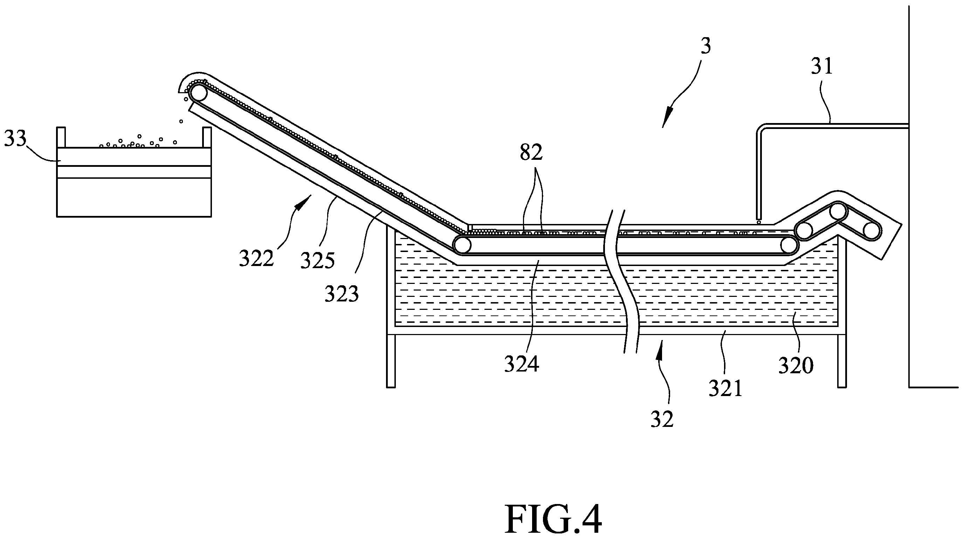

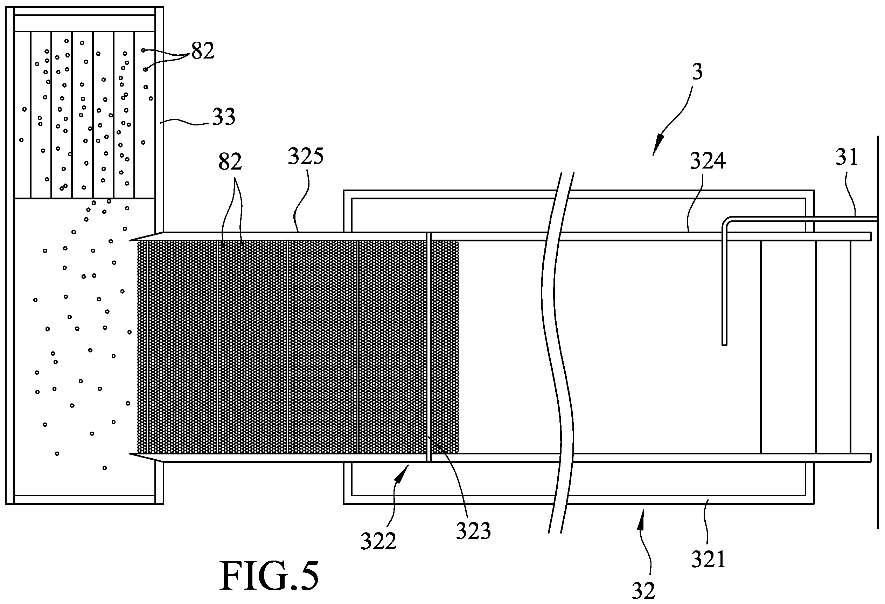

Referring to FIGS. 4 and 5, in combination with FIG. 1, the conveying unit 3 includes a sanitary tube 31 for passage of the cooked tapioca pearls 82 that have undergone cooling in the cooling device 24 therethrough, a washing and draining device 32 disposed downstream of the sanitary tube 31 and located in a low-temperature room, and a vibrating screen 33 disposed downstream of the washing and draining device 32. The sanitary tube 31 has two opposite ends respectively connected to the cooling device 24, which is disposed in a normal temperature room, and the washing and draining device 32, which is disposed in the low-temperature room. The sanitary tube 31 can eliminate the inconvenience of entering and leaving the normal temperature room and the low-temperature room during manual transport of the cooked tapioca pearls 82, and can improve the sanitation level of the cooked tapioca pearls 82 during transport thereof. The washing and draining device 32 has a trough 321 containing water 320 for washing the cooked tapioca pearls 82, a draining mechanism 322, and a conveyor belt 323 disposed on the draining mechanism 322 for conveying the cooked tapioca pearls 82. The draining mechanism 322 has a front portion 324 immersed in the trough 321, and a rear portion 325 extending upwardly and obliquely from the front portion 324 and located externally of the trough 321.

The cooked tapioca pearls 82 from the cooling device 24 are sent to the front portion 324 of the draining mechanism 322 through the sanitary tube 31 and are immersed in the water 320, after which the conveyor belt 323 conveys the cooked tapioca pearls 82 from the front portion 324 to the rear portion 325 of the draining mechanism 322. The cooked tapioca pearls 82 are drained in the rear portion 325. It is worth to mention herein that the conveyor belt 323 has a structure that allows water to pass therethrough, so that water will not accumulate thereon. From the rear portion 325 of the draining mechanism 322, the cooked tapioca pearls 82 are sent to the vibrating screen 33, so that, through the vibration of the vibrating screen 33, the cooked tapioca pearls 82 can be separated and will not stick to one another. As such, the conveying unit 3 can further reduce the stickiness of the cooked tapioca pearls 82.

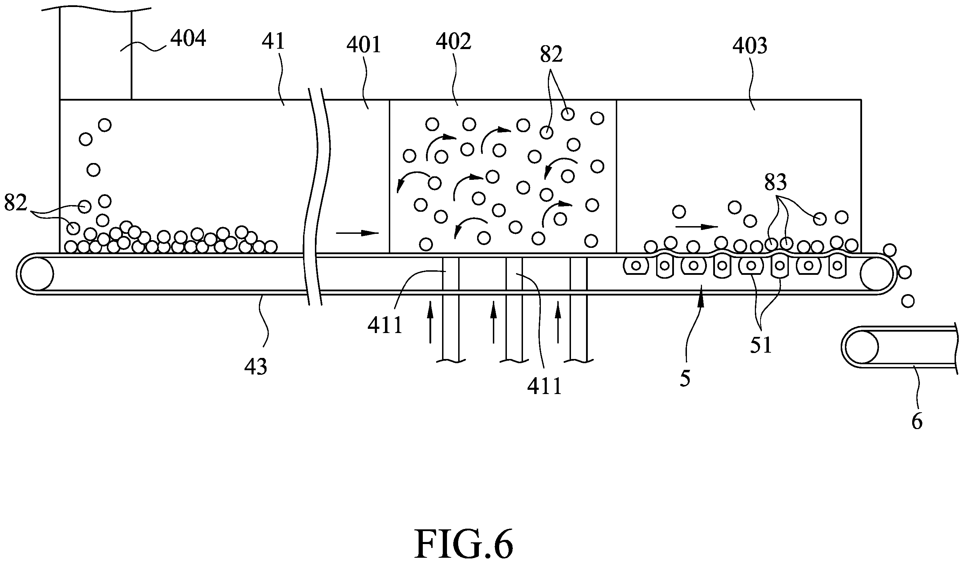

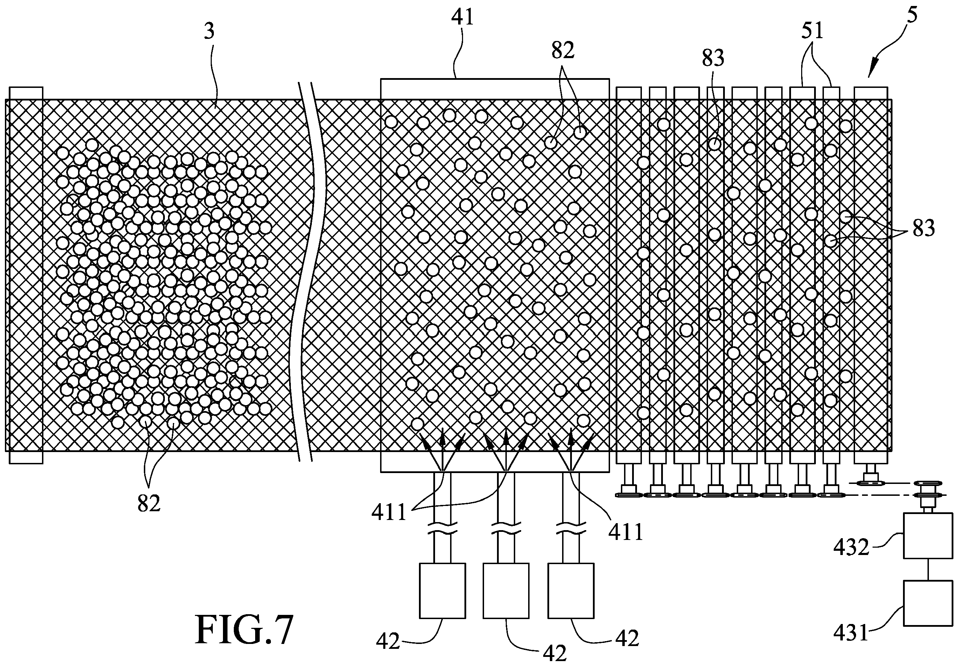

Referring to FIGS. 6 and 7, in combination with FIG. 1, the quick freezing unit 4 is disposed downstream of the conveying unit 3, and includes a box body 41, at least one quick freezing fan 42 connected to the box body 41, and a mesh conveyor belt 43 passing through the box body 41. The box body 41 has first, second and third chambers 401, 402, 403 sequentially arranged along the length of the box body 41 and communicating with one another. In this embodiment, three quick freezing fans 42 are exemplified, but the number of the quick freezing fan 42 can be adjusted according to actual requirement. The quick freezing fans 42 are connected to the box body 41 at a position corresponding to the second chamber 402. Each quick freezing fan 42 has a wind speed ranging from 3 to 5 meters per second, an air pressure ranging from 500 Pa to 1000 Pa, and an output air temperature ranging from -5°C to -40°C. The box body 41 has three spaced-apart air inlets 411 provided in the second chamber 402 and respectively communicating with the quick freezing fans 42. The quick freezing fans 42 are operable to blow low-temperature or cold air into the box body 41 through the air inlets 411. The wind speed at each air inlet 411 is controlled at 75 to 80 meters per second.

An inlet tube 404 is connected to the first chamber 401 for entry of the cooked tapioca pearls 82 from the vibrating screen 33 (see FIGS. 4 and 5) into the first chamber 401. When the cooked tapioca pearls 82 are conveyed by the conveyor belt 42 from the first chamber 401 to the second chamber 402, they are blown by the cold air generated by the quick freezing fans 42, and are quickly and individually frozen so that they will not stick to one another. Thus, individually frozen instant tapioca pearls 83 are obtained. The individually frozen instant tapioca pearls 83 are continuously conveyed by the mesh conveyor belt 43 to the third chamber 403. The conveyor belt 43 is not limited to the mesh structure shown in FIG. 7, and may have other structure, as long as it can facilitate falling of foreign matters therethrough.

The agitating unit 5 is disposed on a rear side of the quick freezing unit 4, and includes a plurality of rollers 51 rotatably disposed below the mesh conveyor belt 43 and located at a position corresponding to the third chamber 403. The mesh conveyor belt 43 and the rollers 51 are driven by a motor 432 which is connected to a power supply 431. Through self-rotation of the rollers 51, the conveyor belt 43 can be pushed and agitated by the rollers 51, so that the individually frozen instant tapioca pearls 83 conveyed by the conveyor belt 43 are also agitated, thereby further ensuring that the individually frozen instant tapioca pearls 83 will not stick to one another.

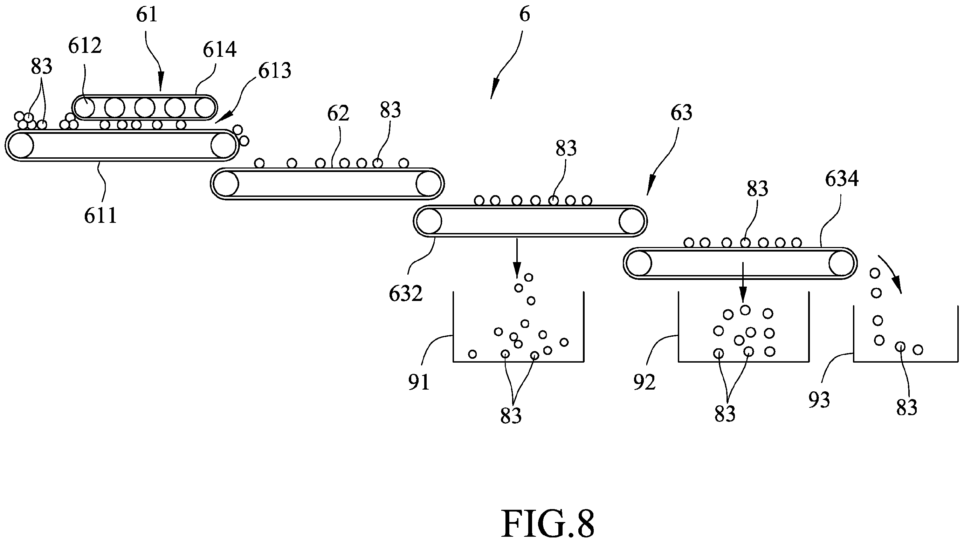

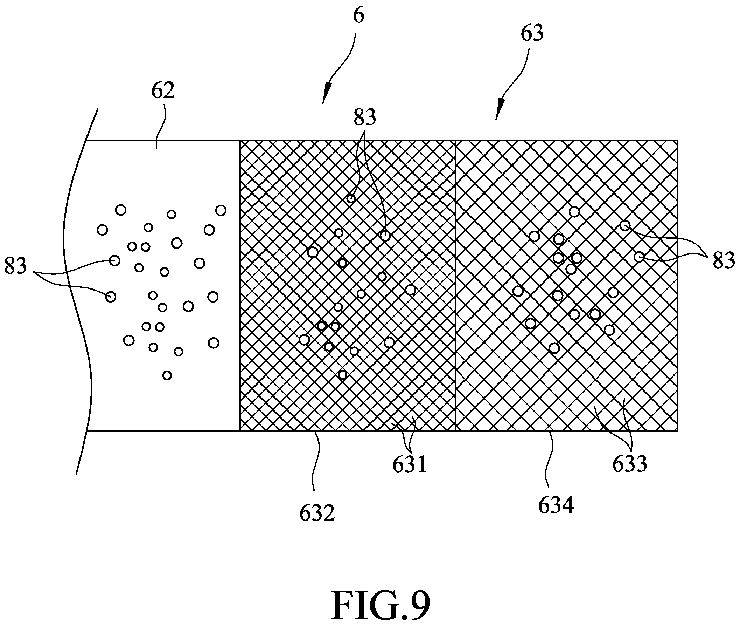

The individually frozen instant tapioca pearls 83 exiting from the agitating unit 5 are then sent to the separation unit 6. Referring to FIGS. 8 and 9, in combination with FIG. 1, the separation unit 6 includes a separation mechanism 61 disposed downstream of the agitating unit 5, a vibration platform 62 disposed downstream of the separation mechanism 61, and a sorting mechanism 63 disposed downstream of the vibration platform 62. The separation mechanism 61 includes a conveyor belt 611 for conveying the individually frozen instant tapioca pearls 83 from the agitating unit 5, a plurality of rollers 612 rollaby disposed above the conveyor belt 611, and a continuous belt 614 that surrounds the rollers 612, that is driven to move by the rollers 612 and that is spaced apart from the conveyor belt 611 to form a passage 613 therebetween. In this embodiment, the rollers 612 are made of fiber reinforced plastic (FRP), while the continuous belt 614 is made of white iron, but are not limited thereto. The passage 613 has a height that just allows a single individually frozen instant tapioca pearl 83 to enter and pass therethrough, and blocks the individually frozen instant tapioca pearls 83 that are adhered to each other.

The continuous belt 614 and the conveyor belt 611 can, however, cooperate with each other to exert forces that can separate and pull apart the adhered individually frozen instant tapioca pearl 83, so that each of the separated individually frozen instant tapioca pearls 83 can enter and pass through the passage 613. The vibration platform 62 receives the individually frozen instant tapioca pearls 83 that exit from the passage 613 and separates them again through vibration. The individually frozen instant tapioca pearls 83 separated by the vibration platform 62 are then sent to the sorting mechanism 63. The sorting mechanism 63 includes a first mesh belt 632 having a surface formed with a plurality of first mesh holes 631, and a second mesh belt 634 disposed downstream of the first mesh belt 632 and having a surface formed with a plurality of second mesh holes 633. Each second mesh hole 633 has a hole diameter larger than that of each first mesh hole 631.

The first mesh belt 632 is configured to allow each individually frozen instant tapioca pearl 83 having a diameter smaller than the hole diameter of each first mesh hole 631 to fall therethrough, and continuously conveys each individually frozen instant tapioca pearl 83 having a diameter larger than the first mesh hole 631 to move toward the second mesh belt 634. The individually frozen instant tapioca pearls 83 falling from the first mesh holes 633 are received in a receptacle 91, and are rejected because they are small in size, so that they are sent for reprocessing. The second mesh belt 634 is configured to allow each individually frozen instant tapioca pearl 83 having a diameter smaller than the hole diameter of each second mesh hole 633 to fall therefrom, and continuously conveys each individually frozen instant tapioca pearl 83 having a diameter larger than the second mesh hole 633 to move forward until it falls from the second mesh belt 634 into a receptacle 93. The individually frozen instant tapioca pearls 83 falling from the second mesh holes 633 are received in a receptacle 92, and are of standard size, so that they are sent to the holding unit 7. The individually frozen instant tapioca pearls 83 received in the receptacle 93 are large in size, so that they are rejected and are sent for reprocessing.

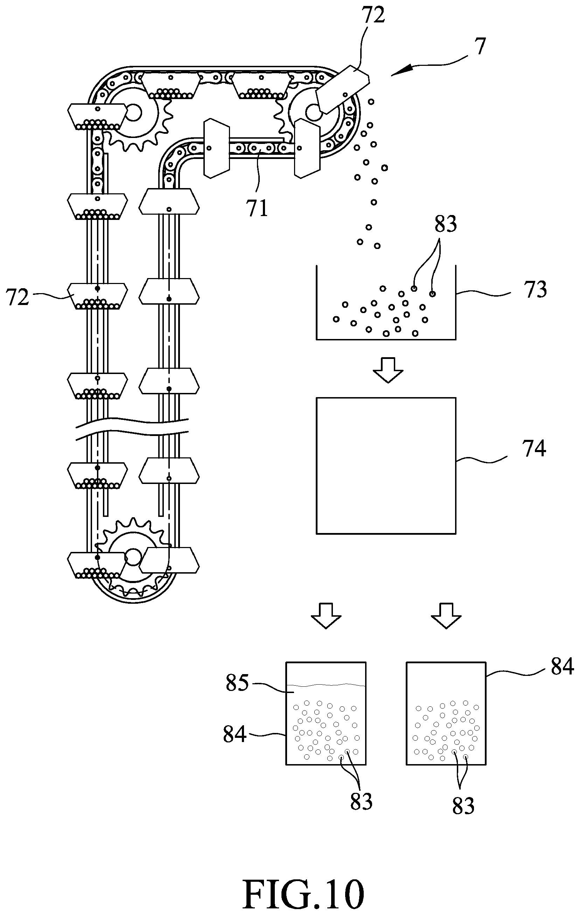

Referring to FIG. 10, in combination with FIG. 1, the holding unit 7 includes a conveying device 71, a plurality of spaced-apart measuring vessels 72 disposed on the conveying device 71, a plurality of containers 73 (only one is shown in FIG. 10) sequentially located below the conveying device 71, and a packaging machine 74 for packaging the individually frozen instant tapioca pearls 83 in the containers 73 in batches. The individually frozen instant tapioca pearls 83 contained in the receptacle 92 are transferred to the measuring vessels 72. The conveying device 71 is configured to drive each measuring vessel 72 that contains a measured amount of the individually frozen instant tapioca pearls 83 to move upward and then rightward until each measuring vessel 72 turns around a corner of the conveying device 71 such that the individually frozen instant tapioca pearls 83 contained in each measuring vessel 72 will fall and drop into one of the containers 73 located right below the corner of the conveying device 71 by gravity. During the fall, the individually frozen instant tapioca pearls 83 are separated by gravity, so that they are prevented from sticking to one another.

The packaging machine 74 is configured for packaging the individually frozen instant tapioca pearls 83 received in the containers 73 in batches. Different sizes of packaging bags 84 may be used to pack the individually frozen instant tapioca pearls 83 according to business or personal use. Each packaging bag 84 containing the individually frozen instant tapioca pearls 83 is then directly freezed and stored. It is to worth to mention herein that the packaging machine 74 may also be used to pack each batch of the individually frozen instant tapioca pearls 83 with water or beverage 85.

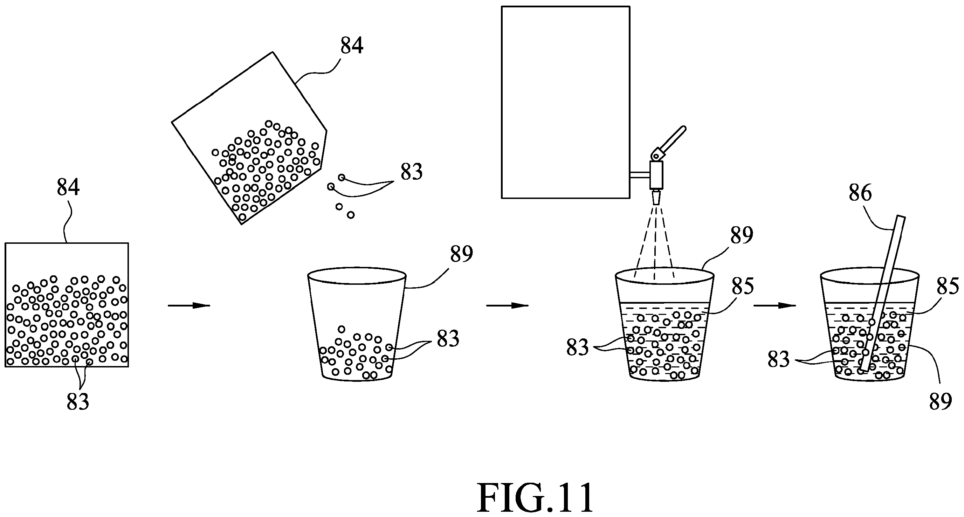

Referring to FIG. 11, in combination with FIGS. 1 and 10, in use, a user only needs to cut and open the packaging bag 84, so that an appropriate amount of the individually frozen instant tapioca pearls 83 can be poured into a container, such as a glass 89. Afterwards, water or other beverage 85, such as fruit juice, fresh milk, black tea, green tea, matcha, milkshake, or bubble drink, can be added to the glass 89. By using a stirrer 86 to stir the mixture in the glass 89, the individually frozen instant tapioca pearls 83 can be quickly thawed for instant consumption. Moreover, if the packaging bag 84 is used to pack the individually frozen instant tapioca pearls 83 with water or beverage 85, the contents of the packaging bag 84 can be directly consumed after thawing. In addition to being used for drinks, the individually frozen instant tapioca pearls 83 may also be used as ingredients for ice products, such as shaved ice, snowflake ice, etc. The individually frozen instant tapioca pearls 83 are thawed by simply soaking them in water, after which they are laid on the ice product for consumption. When selling the drinks or ice products, the vendor can soak a large amount of the individually frozen instant tapioca pearls 83 in water with continuous stirring to thaw the tapioca pearls 83, the texture of the thawed individually frozen instant tapioca pearls 83 can be maintained for 10 hours at room temperature (typically about 26°C). If use in hot drinks, the individually frozen instant tapioca pearls 83 are soaked for a little while, so that the texture thereof can be maintained.

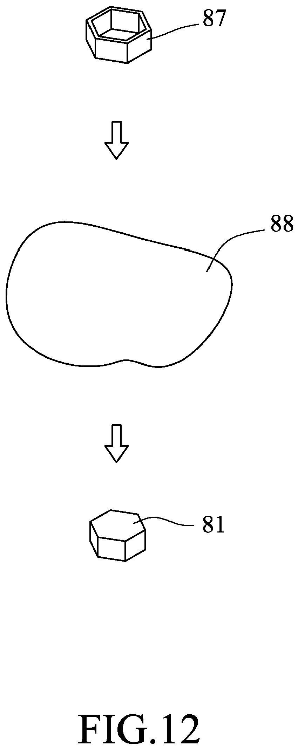

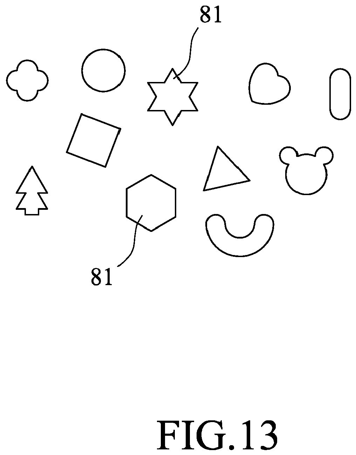

Referring to FIGS. 12 and 13, the raw tapioca pearls 81 may be presented with a plurality of shapes, such as star, triangle, heart, polygon, cloud, crescent moon, tree, etc., using a mold. The molding method includes the steps of: preparing a pattern mold 87 which has one of the aforementioned shapes; preparing an initial material 88 by mixing starch, water and food coloring; pressing the pattern mold 87 on the initial material 88; removing residues of the initial material 88 on the pattern mold 87; and, finally, tapping the pattern mold 87 to detach the raw tapioca pearl 81 with a special shape from the pattern mold 87. Additionally, each tapioca pearl 83 that is large in size and that is received in the receptacle 93 can be directly pressed into the pattern mold 87 so as to obtain the tapioca pearl 83 with a specific shape. Through this, the selling attraction of the individually frozen instant tapioca pearls 83 can be increased, as well as the fun of eating the tapioca pearls 83.

In summary, through the aforesaid structural design of the apparatus of this disclosure for making individually frozen instant tapioca pearls 83, not only the mass production of the individually frozen instant tapioca pearls 83 can be made in advance, but also the individually frozen instant tapioca pearls 83 can be packed in different sizes of the packaging bags 84, so that they can be freezed and stored for a long time and can be readily use. Especially, for business use, the personnel does not have to spend a long time in preparing the tapioca pearls, but only have to take the order from the customer, and then directly remove the tapioca pearls 83 from the freezer of the refrigerator for use. The situation in which the traditional tapioca pearls can easily become sour will not occur. Further, after the individually frozen instant tapioca pearls 83 are removed from the freezer, they can be placed in a container, such as the glass 89, followed by adding water or beverage 85 into the glass 89. The mixture is then stirred to quickly thaw the tapioca pearls 83 for consumption. The thawed tapioca pearls 83 are individually separated, and the chewiness texture thereof is maintained. Moreover, the raw tapioca pearls 81 can be formed in different shapes using a mold to increase its selling attraction and fun of eating the tapioca pearls 83. Therefore, the object of this disclosure can indeed be achieved.

## Claims

1. An apparatus for making individually frozen instant tapioca pearls (83) comprising:
a forming unit (2) including a boiling device (21) for cooking a plurality of raw tapioca pearls (81) in boiling water (213) for 5 to 20 minutes to obtain cooked tapioca pearls (82), a washing device (22) for washing the cooked tapioca pearls (82) from said boiling device (21) with flowing water to remove mucus on surfaces of the cooked tapioca pearls (82), an immersing device (23) for immersing the cooked tapioca pearls (82) that have undergone washing in said washing device (22) in water for 30 to 45 minutes, and a cooling device (24) for cooling the cooked tapioca pearls (82) that have undergone immersing in said immersing device (23) for 60 to 180 minutes;
a conveying unit (3) including a sanitary tube (31) for passage of the cooked tapioca pearls (82) that have undergone cooling in said cooling device (24) therethrough, a washing and draining device (32) for washing and draining the cooked tapioca pearls (82) from said sanitary tube (31), and a vibrating screen (33) for separating the cooked tapioca pearls (82) that have undergone washing and draining in said washing and draining device (32) through vibration;
a quick freezing unit (4) disposed downstream of said conveying unit (3) and including a box body (41) for receiving the cooked tapioca pearls (82) from said vibrating screen (33), and at least one quick freezing fan (42) connected to said box body (41), said at least one quick freezing fan (42) having a wind speed ranging from 3 to 5 meters per second, an air pressure ranging from 500 Pa to 1000 Pa, and an output air temperature ranging from -5°C to -40°C, said at least one quick freezing fan (42) being operable to blow cold air toward the cooked tapioca pearls (82) in said box body (41) so as to quickly freeze the cooked tapioca pearls (82) and obtain individually frozen instant cooked tapioca pearls (83) ;
an agitating unit (5) disposed on a rear side of said quick freezing unit (4) for agitating the individually frozen instant cooked tapioca pearls (83) so that the individually frozen instant cooked tapioca pearls (83) will not stick to one another;
a separation unit (6) including
a separation mechanism (61) disposed downstream of said agitating unit (5) and including a conveyor belt (611) for conveying the individually frozen instant tapioca pearls (83) from said agitating unit (5), a plurality of rollers (612) rollaby disposed above said conveyor belt (611), and a continuous belt (614) that surrounds said rollers (612), that is driven to move by said rollers (612) and that is spaced apart from said conveyor belt (611) to form a passage (613) therebetween, said passage (613) having a height that just allows a single individually frozen instant tapioca pearl (83) to enter and pass therethrough, and
a sorting mechanism (63) disposed downstream of said separation mechanism (61) and including a first mesh belt (632) having a surface formed with a plurality of first mesh holes (631), and a second mesh belt (634) disposed downstream of said first mesh belt (632) and having a surface formed with a plurality of second mesh holes (633), each of said second mesh holes (633) having a hole diameter larger than that of each of said first mesh holes (631), said first mesh belt (632) being configured to allow each of the individually frozen instant tapioca pearls (83) having a diameter smaller than the hole diameter of each of said first mesh holes (631) to fall therethrough and be rejected, said second mesh belt (634) being configured to allow each of the individually frozen instant tapioca pearls (83) having a diameter smaller than the hole diameter of each of said second mesh holes (633) to fall therethrough, and being configured to reject each of the individually frozen instant tapioca pearls (83) having a diameter larger than the hole diameter of each of said second mesh holes (633); and
a holding unit (7) for holding the individually frozen instant tapioca pearls (83) falling from said second mesh belt (634).

2. The apparatus for making individually frozen instant tapioca pearls (83) as claimed in Claim 1, wherein said washing and draining device (32) includes a trough (321) containing water (320), a draining mechanism (322) which includes a front portion (324) immersed in said trough (321) for washing the cooked tapioca pearls (82) that pass through said sanitary tube (31), and a rear portion (325) extending upwardly and obliquely from said front portion (324) and located externally of said trough (321) for draining the cooked tapioca pearls (82) from said front portion (324), and a conveyor belt (323) disposed on said draining mechanism (322) for conveying the cooked tapioca pearls (82) from said front portion (324) to said rear portion (325) of said draining mechanism (322).

3. The apparatus for making individually frozen instant tapioca pearls (83) as claimed in any one of Claims 1 and 2, wherein:
said immersing device (23) has an immersing container (231) containing water (232) with a temperature of 85°C to 95°C and the cooked tapioca pearls (82) that have undergone washing in said washing device (22); and
the raw tapioca pearls (81) used in said forming unit (2) are made by mixing starch, water and food coloring into granular shapes or other shapes using molds, the ratio of starch to water being 2:1, the starch being selected from the group consisting of tapioca flour, potato flour, sweet potato flour, cornstarch, and combinations thereof, the food coloring being selected from the group consisting of caramel coloring, monascus coloring, gardenia coloring, and combinations thereof.

4. The apparatus for making individually frozen instant tapioca pearls (83) as claimed in Claim 3, wherein said immersing container (231) further contains sugar which is dissolved in the water (232) contained in said immersing container (231), the sugar being honey or fructose.

5. The apparatus for making individually frozen instant tapioca pearls (83) as claimed in any one of Claims 1 to 4, wherein said cooling device (24) has a cooling container (241) containing water (242) with a low temperature of 0°C to 10°C and the cooked tapioca pearls (82) that have undergone immersing in said immersing device (23).

6. The apparatus for making individually frozen instant tapioca pearls (83) as claimed in Claim 5, wherein said quick freezing unit (4) further includes a mesh conveyor belt (43) passing through said box body (41) and configured to convey the cooked tapioca pearls (82) and the individual individually frozen instant tapioca pearls (83), said box body (41) having at least one air inlet (411) communicating with said at least one quick freezing fan (42) for entry of cold air generated by said at least one quick freezing fan (42) into said box body (41), the wind speed at said at least one air inlet (411) being controlled at 75 to 80 meters per second, said agitating unit (5) including a plurality of rollers (51) rotatably disposed below said mesh conveyor belt (43) in proximity to a rear end thereof.

7. The apparatus for making individually frozen instant tapioca pearls (83) as claimed in any one of Claims 1 to 6, wherein said separation unit (6) further includes a vibration platform (62) disposed between said separation mechanism (61) and said sorting mechanism (63).

8. The apparatus for making individually frozen instant tapioca pearls (83) as claimed in any one of Claims 1 to 7, wherein said holding unit (7) includes a conveying device (71), a plurality of spaced-apart measuring vessels (72) disposed on and conveyed by said conveying device (71), and a plurality of containers (73) sequentially disposed below said conveying device (71), said conveying device (71) being configured to drive each of said measuring vessels (72) to move upward and then rightward until each of said measuring vessels (73) turns around a corner of said conveying device (71) such that the individually frozen instant tapioca pearls (83) contained in each of said measuring vessels (72) can fall and drop into one of said containers (73) located right below said corner of said conveying device (71) by gravity.

9. The apparatus for making individually frozen instant tapioca pearls (83) as claimed in Claim 8, wherein said holding unit (7) includes a packaging machine (74) for packaging the individually frozen instant tapioca pearls (83) in said containers (73) in batches.

10. The apparatus for making individually frozen instant tapioca pearls (83) as claimed in Claim 9, wherein said packaging machine (74) is configured to pack each batch of the individually frozen instant tapioca pearls (83) with water or beverage (85).
